# EUROPEAN PATENT APPLICATION

(11) **EP 3 059 475 A1**
(43) Date of publication of application: **24.08.2016**
(21) Application number: 16155004.1
(22) Date of filing: 10.02.2016
(51) Int. Cl.: F16H 61/04, F16H 63/50

(54) **CONTROL DEVICE FOR VEHICLE**

(30) Priority: 12.02.2015 JP 2015025431
(71) Applicant: Toyota Jidosha Kabushiki Kaisha, Toyota-shi, Aichi-ken 471-8571 (JP)
(72) Inventor: OTSUBO, Masaaki, Toyota-shi, Aichi-ken, 471-8571 (JP)
(74) Representative: Intès, Didier Gérard André

(57) **Abstract**

A control device (6) for a vehicle includes: a gear shift detection part (7) configured to detect a change of a gear of a manual transmission (4) based on a change of an input shaft rotation speed NI of the manual transmission (4) after a clutch (2) is released, and to output a gear shift detection signal GS every time the change of the gear is detected; and an engine control part (8) configured to perform a shifting rotation synchronous control of synchronizing an engine rotation speed NE with the input shaft rotation speed NI, every time the gear shift detection signal GS is output from the gear shift detection part (7).

## Description

### BACKGROUND OF THE INVENTION

### 1. Field of the Invention

The present invention relates to a control device for a vehicle, particularly, a control device for a vehicle configured such that an output shaft of an engine is connected to an input shaft of a manual transmission via a clutch.

### 2. Description of Related Art

Japanese Patent Application Publication No. 2014-58909 (JP 2014-58909 A) describes a method in which, when an absolute value of a difference between a smooth value and a rough value increases after a clutch is released, it is determined that a gear of the manual transmission is changed. The smooth value is a value obtained by performing a smoothing process on a detection value of a rotation speed of an input shaft of a manual transmission, and the rough value is a value that is not subjected to the smoothing process. When the change of the gear of the manual transmission is detected, a target engine rotation speed having a value suitable for a rotation speed of the input shaft of the manual transmission is set, and a shifting rotation synchronous control of synchronizing an engine rotation speed with the rotation speed of the input shaft of the manual transmission is performed based on the target engine rotation speed.

### SUMMARY OF THE INVENTION

However, JP 2014-58909 A does not describe a case where the gear of the manual transmission is changed again during execution of the shifting rotation synchronous control. Accordingly, when the gear of the manual transmission is changed several times during the release of the clutch, the shifting rotation synchronous control cannot be performed sufficiently, which may cause a large gear shift shock.

The present invention provides a control device for a vehicle which can decrease a gear shift shock even when a gear of a manual transmission is changed several times during release of a clutch.

A control device for a vehicle according to one aspect of the present invention is a control device for a vehicle configured such that an output shaft of an engine is connected to an input shaft of a manual transmission via a clutch, and includes: a gear shift detection part configured to detect a change of a gear of a manual transmission based on a change of a rotation speed of an input shaft of the manual transmission after a clutch is released, and to output a gear shift detection signal indicating that the change of the gear of the manual transmission is detected; and an engine control part configured to perform a shifting rotation synchronous control of synchronizing a rotation speed of an output shaft of the engine with the rotation speed of the input shaft of the manual transmission, in response to the output of the gear shift detection signal from the gear shift detection part. The engine control part performs the shifting rotation synchronous control again when the gear shift detection signal is output from the gear shift detection part during execution of the shifting rotation synchronous control. Accordingly, even when the gear of the manual transmission is changed several times during the release of the clutch, a new shifting rotation synchronous control is restarted from the beginning every time the gear is changed. Consequently, the rotation speed of the output shaft of the engine can be more accurately synchronized with the rotation speed of the input shaft of the manual transmission, thereby making it possible to reduce a gear shift shock. One aspect of the present invention can be also defined as follows. A control device for a vehicle according to one aspect of the present invention is a control device for a vehicle, the vehicle including an engine, a clutch, and a manual transmission, the vehicle being configured such that an output shaft of the engine is connected to an input shaft of the manual transmission via the clutch, and the control device or method includes: an electronic control unit configured to: (i) detect a change of a gear of the manual transmission based on a change of a rotation speed of the input shaft of the manual transmission after the clutch is released; (ii) output a gear shift detection signal indicating that the change of the gear of the manual transmission is detected; (iii) perform a shifting rotation synchronous control of synchronizing a rotation speed of an output shaft of the engine with the rotation speed of the input shaft of the manual transmission, in response to the output of the gear shift detection signal; and (iv) perform the shifting rotation synchronous control again when the gear shift detection signal is output during execution of the shifting rotation synchronous control. The electronic control unit may be configured to:
(v) output the gear shift detection signal when (a) a ratio between the rotation speed of the input shaft of the manual transmission and a speed of the vehicle is stable for a predetermined time or more and (b) the change of the gear of the manual transmission is detected, during execution of the shifting rotation synchronous control. Furthermore the electronic control unit may be configured to:
(vi) reset a target engine rotation speed having a value suitable for the rotation speed of the input shaft of the manual transmission and perform the shifting rotation synchronous control again, when the gear shift detection signal is output during execution of the shifting rotation synchronous control.

During execution of the shifting rotation synchronous control by the engine control part, the gear shift detection part preferably outputs the gear shift detection signal at the time when the rotation speed of the input shaft of the manual transmission is changed suddenly. In this case, it is possible to quickly detect the change of the gear of the manual transmission.

During execution of the shifting rotation synchronous control by the engine control part, the gear shift detection part preferably outputs the gear shift detection signal at the time when the rotation speed of the input shaft of the manual transmission is changed suddenly but not just before lock up. In this case, it is possible to prevent wrong detection of the change of the gear of the manual transmission, based on a change of the rotation speed of the input shaft of the manual transmission at the time when the clutch is coupled again.

During execution of the shifting rotation synchronous control by the engine control part, the gear shift detection part preferably outputs the gear shift detection signal at the time when the rotation speed of the input shaft of the manual transmission is changed suddenly and a ratio between the rotation speed of the input shaft of the manual transmission and a speed of the vehicle is constant for a predetermined time. In this case, since second or later changes of the gear are detected after a first change of the gear is established, it is possible to accurately detect the second or later changes of the gear.

During execution of the shifting rotation synchronous control by the engine control part, the gear shift detection part preferably outputs the gear shift detection signal at the time when the rotation speed of the input shaft of the manual transmission is changed suddenly, and an absolute value of a difference between a smooth value and a rough value increases. The smooth value is a value obtained by performing a first smoothing process on a detection value of the rotation speed of the input shaft of the manual transmission, and the rough value is either a value obtained by performing, on a detection value of the rotation speed of the input shaft of the manual transmission, a second smoothing process with a smoothing degree smaller than that of the first smoothing process, or the detection value of the rotation speed of the input shaft of the manual transmission. In this case, it is possible to prevent wrong detection of the change of the gear of the manual transmission, based on periodic increases and decreases of the rotation speed of the input shaft of the manual transmission at the time when the clutch is released.

In the control device for the vehicle according to the aspect of the present invention, even when the gear of the manual transmission is changed several times during the release of the clutch, a new shifting rotation synchronous control is restarted from the beginning every time the gear is changed. Accordingly, it is possible to sufficiently reduce a difference between the rotation speed of the input shaft of the manual transmission and the rotation speed of the engine, thereby making it possible to reduce a gear shift shock.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram of an essential part of a vehicle according to Embodiment 1 of the present invention;
FIG. 2 is a block diagram illustrating a configuration of a control device illustrated in FIG. 1;
FIG. 3 is a flowchart illustrating an operation of a gear shift detection part illustrated in FIG. 2;
FIG. 4 is a flowchart illustrating an operation of a gear shift detection part of a vehicle according to Embodiment 2 of the present invention;
FIG. 5 is a flowchart illustrating an operation of a gear shift detection part of a vehicle according to Embodiment 3 of the present invention;
FIG. 6 is a time chart that exemplifies an operation at the time of gear shift of the vehicle described in FIG. 5; and
FIG. 7 is a flowchart illustrating an operation of a gear shift detection part of a vehicle according to Embodiment 4 of the present invention.

### DETAILED DESCRIPTION OF EMBODIMENTS

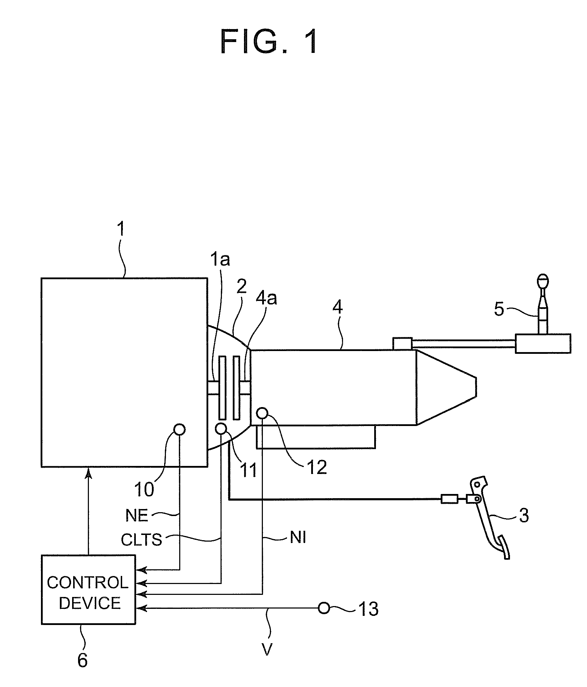

[Embodiment 1] FIG. 1 is a block diagram illustrating an essential part of a vehicle according to Embodiment 1 of the present invention. In FIG. 1, the vehicle includes an engine 1, a clutch 2, a clutch pedal 3, a manual transmission 4, a shift lever 5, a control device (ECU) 6, an engine rotation speed sensor 10, a clutch stroke sensor 11, an input shaft rotation speed sensor 12, and a vehicle speed sensor 13. The vehicle runs by a driving force output from the engine 1. The driving force generated by the engine 1 is transmitted to wheels (not shown) via the clutch 2, the manual transmission 4, and so on.

The engine 1 is an internal combustion engine such as a gasoline engine or a diesel engine, for example. The engine 1 includes a plurality of cylinders and a fuel injection device that supplies fuel to each of the plurality of cylinders. The fuel injection device injects an appropriate amount of fuel to each cylinder at an appropriate timing based on a control signal from the control device 6, and stops the injection of the fuel to the each cylinder. A fuel/air mixture is formed in each cylinder by injection of the fuel by the fuel injection device. The fuel/air mixture thus formed is fired by an ignition plug that operates based on a control signal from the control device 6, and then bums. Due to the burning of the fuel/air mixture in each cylinder, an output shaft (a crank shaft) 1a of the engine 1 rotates. The output shaft 1a of the engine 1 is connected to an input shaft 4a of the manual transmission 4 via the clutch 2.

The clutch 2 includes two friction plates provided so as to be opposed to each other. When the clutch pedal 3 is stepped by a driver, the two friction plates of the clutch 2 are distanced from each other, so as to block power transmission between the output shaft 1a of the engine 1 and the input shaft 4a of the manual transmission 4. When the clutch pedal 3 is released by the driver, the two friction plates of the clutch 2 make contact with each other, so as to transmit a power between the output shaft 1a of the engine 1 and the input shaft 4a of the manual transmission 4.

The manual transmission 4 has a plurality of gears having different gear ratios. The plurality of gears includes gears from a first gear to a fifth gear, for example. A gear ratio is a ratio between a rotation speed NI of the input shaft 4a and a rotation speed of an output shaft (not shown). The gear ratio is larger toward a gear of a low-speed side (the first gear side), and the gear ratio is smaller toward a gear of a high-speed side (the fifth gear side).

The shift lever 5 is provided in an operable manner along a shift gate. A position corresponding to each of the plurality of gears is assigned on the shift gate. When the shift lever 5 is operated by the driver so that the shift lever 5 moves to a position (e.g., a position corresponding to the first gear) corresponding to any of the plurality of gears, a gear (e.g., the first gear) assigned in the manual transmission 4 is selected. The manual transmission 4 changes a rotation speed of the output shaft 1a of the engine 1 to a desired rotation speed according to the gear thus selected, and transmits it to the wheels via a differential, for example.

The engine rotation speed sensor 10 detects a rotation speed NE (rpm) of the output shaft 1a of the engine 1, and outputs a signal indicative of a detection value to the control device 6. The clutch stroke sensor 11 detects a clutch stroke CLTS indicative of a distance amount between the two friction plates included in the clutch 2, and outputs a signal indicative of a detection value to the control device 6. The input shaft rotation speed sensor 12 detects a rotation speed NI (rpm) of the input shaft 4a of the manual transmission 4, and outputs a signal indicative of a detection value to the control device 6. The vehicle speed sensor 13 detects a speed V of the vehicle and outputs a signal indicative of a detection value to the control device 6.

The control device 6 controls the engine 1 based on the output signals of the sensors 10 to 13. As a part of the engine control, at the time of changing of the gear of the manual transmission 4, the control device 6 performs a rotation speed control of the engine 1, that is, a shifting rotation synchronous control so as to synchronize an engine rotation speed NE with an input shaft rotation speed NI.

That is, when the vehicle runs with the clutch 2 being coupled, the rotation speed NE of the output shaft 1a of the engine 1 and the rotation speed NI of the input shaft 4a of the manual transmission 4 accord with each other, and the input shaft rotation speed NI is changed by a gear selected from among the plurality of gears of the manual transmission 4, and transmitted to the wheels.

When the driver depresses the clutch pedal 3 to release the clutch 2 and operates the shift lever 5, so that the gear of the manual transmission 4 is changed. Thus, the rotation of the wheel is transmitted to the input shaft 4a via the gear of the manual transmission 4, so that the input shaft rotation speed NI is changed. When the input shaft rotation speed NI is changed, the engine rotation speed NE and the input shaft rotation speed NI are separated from each other. In this state, when the clutch pedal 3 is released to couple the clutch 2 again, a large gear shift shock occurs. In view of this, when the change of the gear of the manual transmission 4 is detected, the control device 6 performs the shifting rotation synchronous control so as to reduce a gear shift shock.

In order to perform such a shifting rotation synchronous control precisely, it is necessary to accurately detect the change of the gear of the manual transmission 4 according to the operation of the shift lever 5 by the driver. However, the vehicle of Embodiment 1 is not provided with a shift position sensor that detects an operation position of the shift lever 5, so the change of the gear cannot be detected directly. In view of this, in Embodiment 1, the change of the gear of the manual transmission 4 is detected based on a change of the input shaft rotation speed NI along with the change of the gear of the manual transmission 4 after the clutch 2 is released.

However, when the clutch 2 is released at the time of gear shift, a driving system of the vehicle is disconnected from the engine 1, so that torsional vibrations occur in the driving system due to a reaction thereof and the input shaft rotation speed NI periodically increases and decreases due to the torsional vibrations. Accordingly, just by simply seeing the input shaft rotation speed NI, the torsional vibrations of the driving system after the clutch 2 is released may not be able to be distinguished from the change of the input shaft rotation speed NI along with the change of the gear of the manual transmission 4.

In view of this, in JP 2014-58909 A, the change of the gear is detected by use of two values as follows. A first value is a smooth value NIs of an input shaft rotation speed obtained by performing a first smoothing process on a detection value of the input shaft rotation speed NI. A second value is a rough value of the input shaft rotation speed, which is either a value obtained by performing, on the detection value of the input shaft rotation speed NI, a second smoothing process with a smoothing degree smaller than that of the first smoothing process, or the detection value of the input shaft rotation speed NI. In a case where an absolute value of a difference between the smooth value NIs and the rough value increases after the clutch 2 is released, it is determined that the gear of the manual transmission 4 is changed.

In JP 2014-58909 A, A smoothing process is used to calculate the smooth value NIs. The detection value of the input shaft rotation speed NI is used as the rough value of the input shaft rotation speed. The smoothing process is performed as follows. An updating value is obtained by dividing the difference between a value to be smoothed and the current value by an smoothing coefficient. Next, the current value is updated by adding the updating value to the current value. For example, the smooth value NIs is calculated according to Formula (1) as follows. NIs[n] = NIs[n-1] + (NI - NIs[n-1])/TN ... (1). Here, NIs[n] indicates a value of a smooth value NIs to be calculated this time, and NIs[n-1] indicates a value of a smooth value NIs calculated previously. Further, TN is an annealing coefficient and a constant of 1 or more.

Since a steep change of the input shaft rotation speed NI is smoothed at the time of calculating the smooth value NIs, a steep change of the input shaft rotation speed NI along with the change of the gear of the manual transmission 4 is hard to be reflected on the smooth value NIs. In the meantime, on the detection value of the input shaft rotation speed NI used as the rough value, the steep change of the input shaft rotation speed NI along with the change of the gear of the manual transmission 4 is reflected as it is. Accordingly, by seeing a deviation between the smooth value NIs and the rough value, it is possible to accurately detect the change of the input shaft rotation speed NI along with the change of the gear of the manual transmission 4.

Further, in JP 2014-58909 A, when the change of the gear of the manual transmission 4 is detected, a target engine rotation speed NT having a value suitable for the input shaft rotation speed NI of the manual transmission 4 is set, and the shifting rotation synchronous control of synchronizing the engine rotation speed NE with the input shaft rotation speed NI of the manual transmission 4 is performed based on the target engine rotation speed NT.

However, JP 2014-58909 A does not describe a case where the gear of the manual transmission 4 is changed again during execution of the shifting rotation synchronous control. Accordingly, when the gear of the manual transmission 4 is changed several times during the release of the clutch 2, the shifting rotation synchronous control cannot be performed, which may cause a large gear shift shock.

In view of this, in Embodiment 1, when the gear of the manual transmission 4 is changed several times during the release of the clutch 2, the shifting rotation synchronous control is performed every time the gear is changed. Accordingly, even when the gear of the manual transmission 4 is changed several times during the release of the clutch 2, the engine rotation speed NE can be synchronized with the input shaft rotation speed NI of the manual transmission 4, thereby making it possible to reduce a gear shift shock.

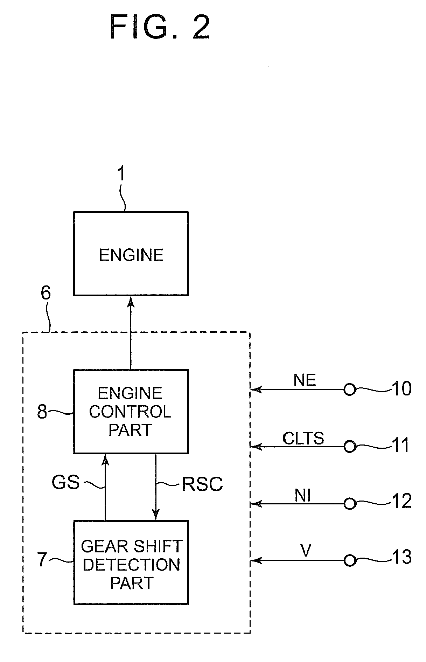

As illustrated in FIG. 2, the control device 6 of Embodiment 1 includes a gear shift detection part 7 and an engine control part 8. When an absolute value of a difference between the smooth value NIs and the rough value increases after the clutch 2 is released, the gear shift detection part 7 determines that the gear of the manual transmission 4 is changed, and outputs, to the engine control part 8, a gear shift detection signal GS indicating that the gear is changed. The gear shift detection signal GS is a pulse signal, for example.

The engine control part 8 has first and second modes. The first mode is a mode in which a target engine torque TEt is found based on a map indicative of a relationship of a difference (NT - NE) between the target engine rotation speed NT and the engine rotation speed NE with respect to the target engine torque TEt, and a high response control of the engine 1 is performed based on the target engine torque TEt. The second mode is a mode in which a target engine torque TEt is found by performing a PI (proportion and integral calculus) control on the difference (NT - NE) between the target engine rotation speed NT and the engine rotation speed NE, and a feedback control of the engine 1 is performed based on the target engine torque TEt.

The engine control part 8 performs the first or second mode depending on a situation, but when the gear shift detection signal GS is output from the gear shift detection part 7 during execution of the second mode, the engine control part 8 sets the input shaft rotation speed NI of the manual transmission 4 to the target engine rotation speed NT, and performs the first mode again. When an absolute value |NT - NE| of the difference between the target engine rotation speed NT and the engine rotation speed NE reaches a predetermined value (e.g., 100 rpm) or less during execution of the first mode, the engine control part 8 finishes the first mode and performs the second mode. Hereby, the shifting rotation synchronous control of synchronizing the engine rotation speed NE with the input shaft rotation speed NI of the manual transmission 4 is implemented. When the shifting rotation synchronous control is performed, the engine control part 8 sets a signal RSC to a "H" level, which is an activation level, and when the shifting rotation synchronous control is not performed, the engine control part 8 sets the signal RSC to a "L" level, which is a deactivation level.

When the input shaft rotation speed NI of the manual transmission 4 is changed suddenly during a period in which the signal RSC is set to the "H" level, the gear shift detection part 7 determines that the gear of the manual transmission 4 is changed, and outputs the gear shift detection signal GS to the engine control part 8 every time the gear shift detection part 7 determines that the gear is changed.

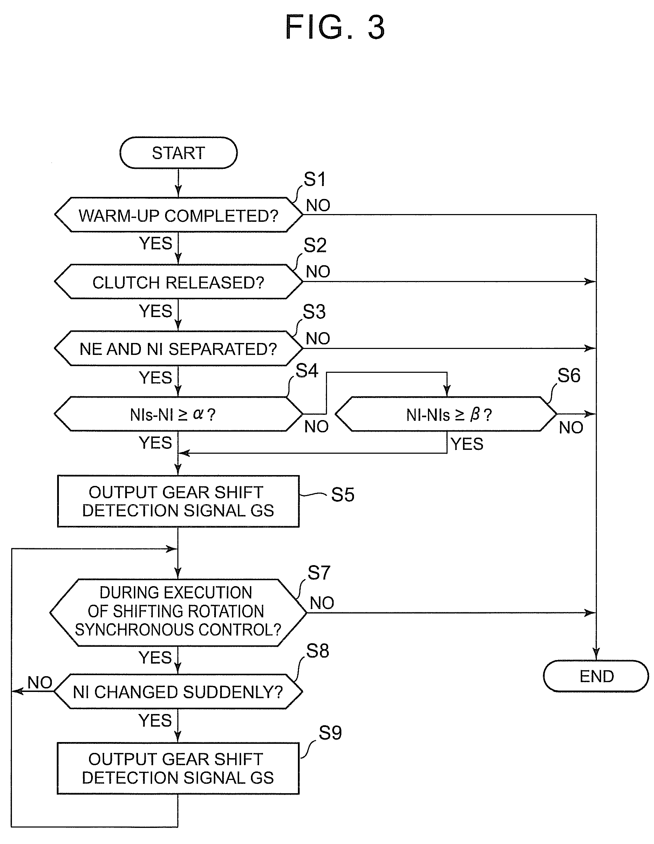

FIG. 3 is a flowchart indicating an operation of the gear shift detection part 7. In step S1, the gear shift detection part 7 determines whether or not warm-up of the manual transmission 4 is completed. When the warm-up is not completed, the detection operation is finished, but when the warm-up is completed, the process proceeds to step S2.

When the gear of the manual transmission 4 is to be changed, the driver releases an accelerator pedal and steps the clutch pedal 3 to release the clutch 2 before the change of the gear. In view of this, the gear shift detection part 7 determines whether or not the clutch 2 is released, in step S2. When the clutch 2 is not released, the detection operation is finished, but when the clutch 2 is released, the process proceeds to step S3.

The determination on whether the clutch 2 is released or not is performed based on a clutch stoke CLTS detected by the clutch stoke sensor 11. More specifically, when the clutch stoke CLTS is larger, by a predetermined value or more, than an opening degree at the time when the clutch 2 is completely coupled, it is determined that the clutch 2 is released, and otherwise, it is determined that the clutch 2 is not released.

When the driver releases the accelerator pedal and steps the clutch pedal 3 to release the clutch 2, the engine rotation speed NE decreases and the input shaft rotation speed NI gradually decreases according to a vehicle speed V, so that the engine rotation speed NE and the input shaft rotation speed NI are separated from each other. In view of this, the gear shift detection part 7 determines whether or not the engine rotation speed NE and the input shaft rotation speed NI are separated from each other, in step S3. More specifically, it is determined whether or not an absolute value of a difference between the engine rotation speed NE and the input shaft rotation speed NI is kept at a prescribed value or more for a given time or more. Here, when it is determined that the engine rotation speed NE and the input shaft rotation speed NI are not separated from each other, the detection operation is finished, and when it is determined that NE and NI are separated from each other, the process proceeds to step S4.

When the driver operates the shift lever 5 to downshift the gear of the manual transmission 4, the input shaft rotation speed NI suddenly increases, and when the gear of the manual transmission 4 is upshifted, the input shaft rotation speed NI suddenly decreases. A steep change of the input shaft rotation speed NI at this time is smoothed by a smoothing process, so reflection thereof on the smooth value NIs is delayed. Accordingly, a deviation NI - NIs between the rough value (a current detection value of the input shaft rotation speed NI) and the smooth value NIs of the input shaft rotation speed becomes large.

In step S4, the gear shift detection part 7 determines whether a difference NIs - NI between the smooth value NIs of the input shaft rotation speed and the rough value (the current detection value of the input shaft rotation speed NI) is at least a prescribed determination value α or not. The determination value α is a positive value. When it is determined that NIs - NI ≥ α is satisfied, the gear shift detection signal GS is output in step S5. When NIs - NI ≥ α is satisfied, the gear of the manual transmission 4 is upshifted.

When it is determined that NIs - NI ≥ α is not satisfied in step S4, it is determined, in step S6, whether a difference NI - NIs between the rough value (the current detection value of the input shaft rotation speed NI) and the smooth value NIs of the input shaft rotation speed is at least prescribed determination value β or not. The determination value β is a positive value. When it is determined that NI - NIs ≥ β is satisfied, the gear shift detection signal GS is output in step S5. When NI - NIs ≥ β is satisfied, the gear of the manual transmission 4 is downshifted. When it is determined that NI - NIs ≥ β is not satisfied in step S6, the detection operation is finished.

Note that α > β is established. The input shaft rotation speed NI after the clutch 2 is released tends to gradually decrease due to a frictional resistance caused by stirring or the like of oil inside the manual transmission 4. In order to reflect such a decrease on the determination, α > β is established.

When the gear shift detection signal GS is output from the gear shift detection part 7, the engine control part 8 sets a target engine rotation speed NT according to the input shaft rotation speed NI, and performs the shifting rotation synchronous control based on the target engine rotation speed NT. The engine control part 8 performs the shifting rotation synchronous control until the engine rotation speed NE reaches the input shaft rotation speed NI, and during the control, the signal RSC is set to the "H" level, which is an activation level. When the engine rotation speed NE reaches the input shaft rotation speed NI and the coupling of the clutch 2 is completed, the shifting rotation synchronous control is finished and the signal RSC is set to the "L" level, which is a deactivation level.

When the gear shift detection signal GS is output in step S5, it is determined, in step S7, whether or not the shifting rotation synchronous control is being performed. Whether or not the shifting rotation synchronous control is being performed is determined based on whether the signal RSC from the engine control part 8 is the "H" level or not. When it is determined, in step S7, the shifting rotation synchronous control is not being performed, the shifting rotation synchronous control is finished, so that the detection operation is finished.

The driver may operate the shift lever 5 again during execution of the shifting rotation synchronous control in some cases so as to change the gear of the manual transmission 4. Also in this case, when the gear is downshifted, the input shaft rotation speed NI suddenly increases, and when the gear is upshifted, the input shaft rotation speed NI suddenly decreases. In view of this, when it is determined, in step S7, that the shifting rotation synchronous control is being performed, the gear shift detection part 7 determines whether or not the input shaft rotation speed NI is changed suddenly, in step S8. Whether or not the input shaft rotation speed NI is changed suddenly is determined, for example, based on whether an absolute value of a derivative dNI/dt of the input shaft rotation speed NI exceeds a predetermined value γ or not.

When it is determined, in step S8, that the input shaft rotation speed NI is not changed suddenly, the process returns to step S7, but when it is determined, in step S8, that the input shaft rotation speed NI is changed suddenly, the gear shift detection signal GS is output in step S9, and then the process returns to step S7. Steps S1 to S9 are performed repeatedly by a given cycle.

As described above, in Embodiment 1, even when the gear of the manual transmission 4 is changed several times during the release of the clutch 2, the shifting rotation synchronous control is performed every time the gear is changed. Accordingly, the engine rotation speed NE can be synchronized with the input shaft rotation speed NI of the manual transmission 4, thereby making it possible to reduce a gear shift shock.

Note that, in Embodiment 1, when the gear shift detection signal GS is output from the gear shift detection part 7, the input shaft rotation speed NI of the manual transmission 4 is set as the target engine rotation speed NT. However, the present embodiment is not limited to this, and a product No x Gr of an output shaft rotation speed No of the manual transmission 4 and an estimated value Gr of a gear ratio after gear shift may be set as the target engine rotation speed NT. A sensor for detecting the output-shaft rotation speed No of the manual transmission 4 may be provided separately, or No may be found from a detection value of the vehicle speed sensor 13. The estimated value Gr of the gear ratio after the gear shift is estimated from a gear ratio before the gear shift. The gear ratio before the gear shift can be found from the input shaft rotation speed NI of the manual transmission 4 and a vehicle speed V.

Further, a value of a larger one of the input shaft rotation speed NI of the manual transmission 4 and the product No x Gr of the output shaft rotation speed No of the manual transmission 4 and the estimated value Gr of the gear ratio after the gear shift may be set as the target engine rotation speed NT. If the estimated value Gr of the gear ratio after the gear shift is correct, NI = No x Gr is satisfied.

Further, in Embodiment 1, the engine control part 8 has the first mode and the second mode. However, the present embodiment is not limited to this, and the engine control part 8 may have one third mode. The third mode is a mode in which a target engine torque TEt is found by performing a PID (proportion, integral calculus, and differential calculus) control on a difference (NT - NE) between the target engine rotation speed NT and the engine rotation speed NE, and the engine 1 is controlled based on the target engine torque TEt. In this modification, the engine control part 8 regularly performs the third mode, and every time the gear shift detection signal GS is output from the gear shift detection part 7, the product No x Gr of the output shaft rotation speed No of the manual transmission 4 and the estimated value Gr of the gear ratio after the gear shift is set as the target engine rotation speed NT, so as to keep performing the third mode. Hereby, the shifting rotation synchronous control of synchronizing the engine rotation speed NE with the input shaft rotation speed NI of the manual transmission 4 is implemented.

[Embodiment 2] In Embodiment 1, the gear shift detection signal GS is output when the input shaft rotation speed NI of the manual transmission 4 is changed suddenly during execution of the shifting rotation synchronous control (YES in step S8). However, when the driver releases the clutch pedal 3 to complete the gear shift after the driver operates the shift lever 5, the input shaft rotation speed NI may be changed suddenly due to an impact caused at the time when two friction plates of the clutch 2 make contact with each other. In Embodiment 1, the gear shift detection signal GS may be output wrongly when the sudden change of the input shaft rotation speed NI at that time is detected. In Embodiment 2, such a malfunction is prevented.

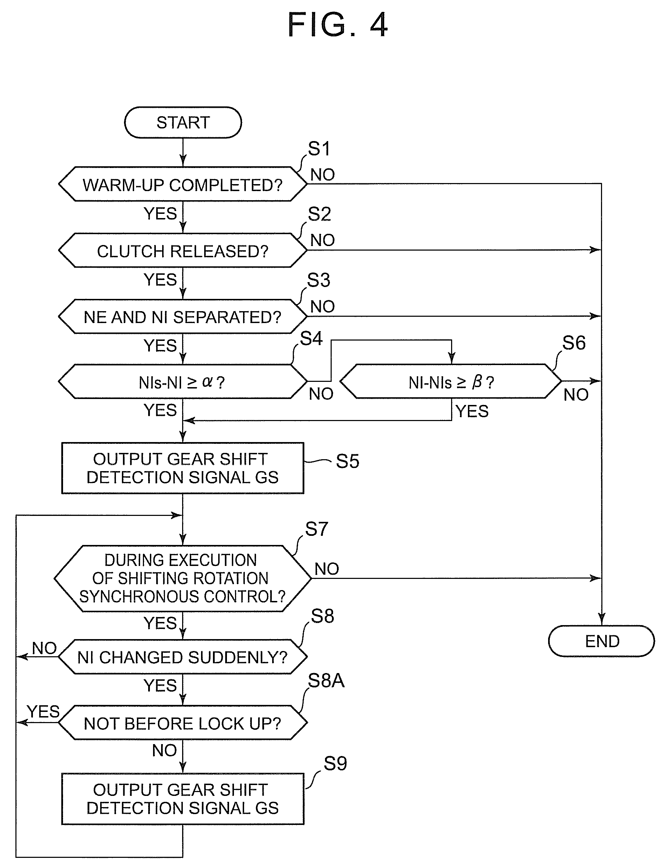

FIG. 4 is a flowchart illustrating an operation of a gear shift detection part 7 of a vehicle according to Embodiment 2 of the present invention, and is a view that is compared with FIG. 3. With reference to FIG. 4, the gear shift detection part 7 of Embodiment 2 is different from the gear shift detection part 7 of Embodiment 1 in that step S8A is performed between step S8 and step S9.

When it is determined, in step S8, that an input shaft rotation speed NI is changed suddenly (YES in step S8), the gear shift detection part 7 determines whether or not the sudden change is just before lock up, in step S8A. The lock up indicates that a clutch 2 is coupled so as to directly connect an output shaft 1a of an engine 1 to an input shaft 4a of a manual transmission 4.

The determination on whether or not the sudden change is just before lock up can be performed, for example, based on whether an absolute value |NE - NI| of a difference between an engine rotation speed NE and an input shaft rotation speed NI of the manual transmission 4 is sufficiently small or not. Whether or not the sudden change is just before lock up may be determined based on whether a clutch stroke CLTS is smaller than a predetermined value or not.

Even in a case where the input shaft rotation speed NI is changed suddenly, if the sudden change is just before the lock up (YES in step S8A), there is a possibility that the input shaft rotation speed NI may be changed suddenly due to an impact caused when two friction plates of the clutch 2 make contact with each other. Accordingly, the process returns to step S7. When it is determined that the input shaft rotation speed NI is changed suddenly but not just before lock up (NO in step S8A), the gear shift detection signal GS is output in step S9, and then, the process returns to step S7. The other configurations and operations are the same as in Embodiment 1, so descriptions thereof are not repeated herein.

In Embodiment 2, it is possible to obtain the same effect as Embodiment 1, and further, it is possible to prevent wrong detection of gear shift based on a change of the input shaft rotation speed NI of the manual transmission 4 at the time when the clutch 2 is coupled again.

[Embodiment 3] In Embodiment 2, the gear shift detection signal GS is output when the input shaft rotation speed NI of the manual transmission 4 is changed suddenly during execution of the shifting rotation synchronous control but the sudden change is not just before lock up (NO in step S8A). However, there is such a possibility that, when the input shaft rotation speed NI is changed in response to first gear shift, the change may be detected several times and the gear shift detection signal GS may be wrongly output several times. In Embodiment 3, such a malfunction is prevented.

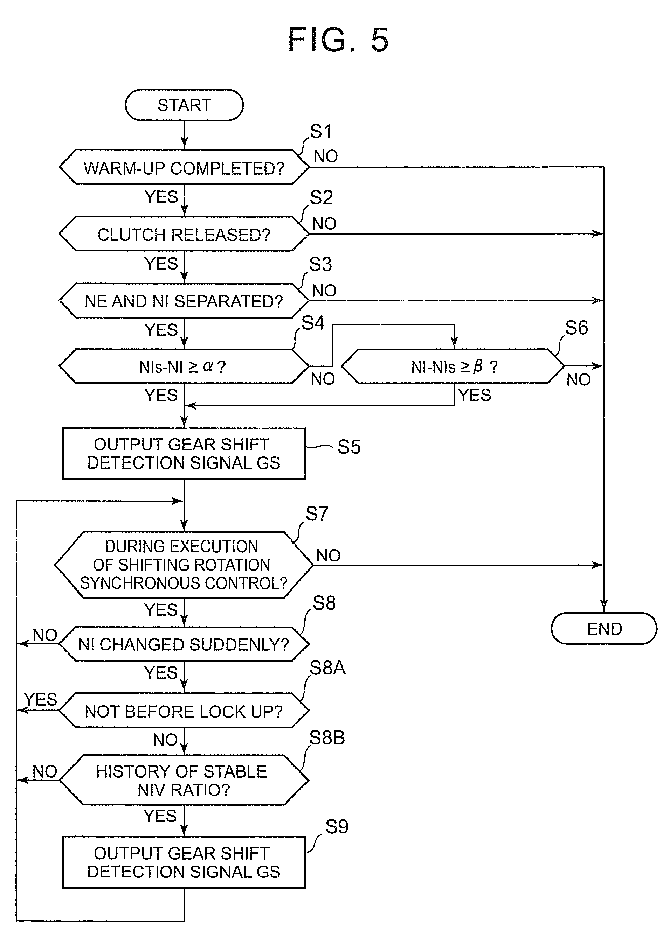

FIG. 5 is a flowchart illustrating an operation of a gear shift detection part 7 of a vehicle according to Embodiment 3 of the present invention, and is a view that is compared with FIG. 4. With reference to FIG. 5, the gear shift detection part 7 of Embodiment 3 is different from the gear shift detection part 7 of Embodiment 2 in that step S8B is performed between step S8A and step S9.

When it is determined, in step S8A, that a sudden change is not just before lock up (NO in step S8A), the gear shift detection part 7 determines whether or not there is a history that a NIV ratio is stable during execution of a shifting rotation synchronous control, in step S8B. The NIV ratio indicates a ratio NI/V between an input shaft rotation speed NI of a manual transmission 4 and a vehicle speed V. Whether the NIV ratio is stable or not is determined based on whether or not a time during which the NIV ratio is constant exceeds a predetermined time. If there is a history that the NIV ratio is stable, a change of the input shaft rotation speed NI for first gear shift has been already finished, and the first gear shift is established.

Even in a case where the input shaft rotation speed NI is changed suddenly but not just before lock up (NO in step S8A), if there is no history that the NIV ratio is stable (NO in step S8B), there is a possibility that the change of the input shaft rotation speed NI for the first gear shift may be wrongly detected several times, so the process returns to step S7. When the input shaft rotation speed NI is changed suddenly but not just before lock up and there is a history that the NIV ratio is stable (YES in step S8B), a gear shift detection signal GS is output in step S9. Then, the process returns to step S7. The other configurations and operations are the same as in Embodiment 1, so descriptions thereof are not repeated herein.

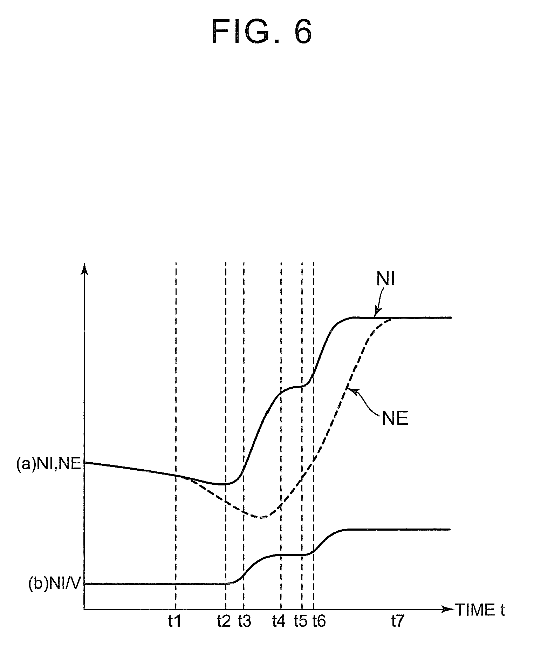

FIG. 6 is a time chart that exemplifies the shifting rotation synchronous control in this vehicle. FIG. 6 shows a case where downshifting is performed twice. In an initial state, the clutch 2 is coupled. Accordingly, an engine rotation speed NE accords with the input shaft rotation speed NI, so the NIV ratio is maintained to be constant. Since an accelerator pedal is released by a driver to perform gear shift, the engine rotation speed NE and the input shaft rotation speed NI gradually decrease. Warm-up of the manual transmission 4 is completed (S1).

When a clutch pedal 3 is stepped by the driver at a time t1, the clutch 2 is released (S2) and the engine rotation speed NE decreases, so that the engine rotation speed NE and the input shaft rotation speed NI are separated from each other (S3). When a shift lever 5 is operated by the driver to perform first downshifting on a gear of the manual transmission 4 at a time t2, the input shaft rotation speed NI increases toward a value determined based on a vehicle speed V and a gear ratio after the change, and the NIV ratio also increases.

When a difference NI - NIs between a rough value of the input shaft rotation speed and a smooth value reaches a determination value β or more at a time t3 (S6), a gear shift detection signal GS is output from the gear shift detection part 7 (S5). In response to the gear shift detection signal GS, an engine control part 8 sets a first target engine rotation speed NT1 having a value suitable for the input shaft rotation speed NI, and increases the engine rotation speed NE toward the first target engine rotation speed NT1 thus set.

When the input shaft rotation speed NI reaches the value determined based on the vehicle speed V and the gear ratio after the change at a time t4, the NIV ratio becomes stable once, so a history that the NIV ratio is stable is generated. When the shift lever 5 is operated by the driver again to perform second downshifting on the gear of the manual transmission 4 at a time t5, the input shaft rotation speed NI increases again toward the value determined based on the vehicle speed V and the gear ratio after the change, and the NIV ratio also increases.

At a time t6, it is determined that the input shaft rotation speed NI is changed suddenly during execution of the shifting rotation synchronous control (S7, S8), it is determined that the sudden change is not just before lock up (S8A), and it is determined that there is a history that the NIV ratio is stable (S8B). Hereby, the gear shift detection signal GS is output from the gear shift detection part 7 (S9). In response to the gear shift detection signal GS, the engine control part 8 sets a second target engine rotation speed NT2 having a value suitable for the input shaft rotation speed NI, and increases the engine rotation speed NE toward the second target engine rotation speed NT2 thus set.

When the input shaft rotation speed NI reaches the value determined based on the vehicle speed V and the gear ratio after the change, the NIV ratio becomes stable. When the engine rotation speed NE reaches the input shaft rotation speed NI at a time t7, the shifting rotation synchronous control is completed (S7). After that, when the driver releases the clutch pedal 3, the clutch 2 is coupled smoothly, so that a gear shift shock is restrained to be small. This is because the engine rotation speed NE accords with the input shaft rotation speed NI.

In Embodiment 3, it is possible to obtain the same effect as Embodiment 2, and further, it is possible to prevent the gear shift detection signal GS from being output several times based on the change of the input shaft rotation speed NI for the first gear shift.

[Embodiment 4] In Embodiment 3, the gear shift detection signal GS is output when the input shaft rotation speed NI of the manual transmission 4 is changed suddenly during execution of the shifting rotation synchronous control but the sudden change is not just before lock up and there is a history that the NIV ratio is stable (YES in step S8B). However, as described in Embodiment 1, when the clutch 2 is released at the time of gear shift, a driving system of the vehicle is disconnected from the engine 1, so that torsional vibrations occur in the driving system due to a reaction thereof and the input shaft rotation speed NI periodically increases and decreases due to the torsional vibrations. Accordingly, when the input shaft rotation speed NI is changed due to the torsional vibrations of the driving system after the clutch 2 is released, it may be determined that the input shaft rotation speed NI of the manual transmission 4 is changed suddenly. In Embodiment 4, such a malfunction is prevented.

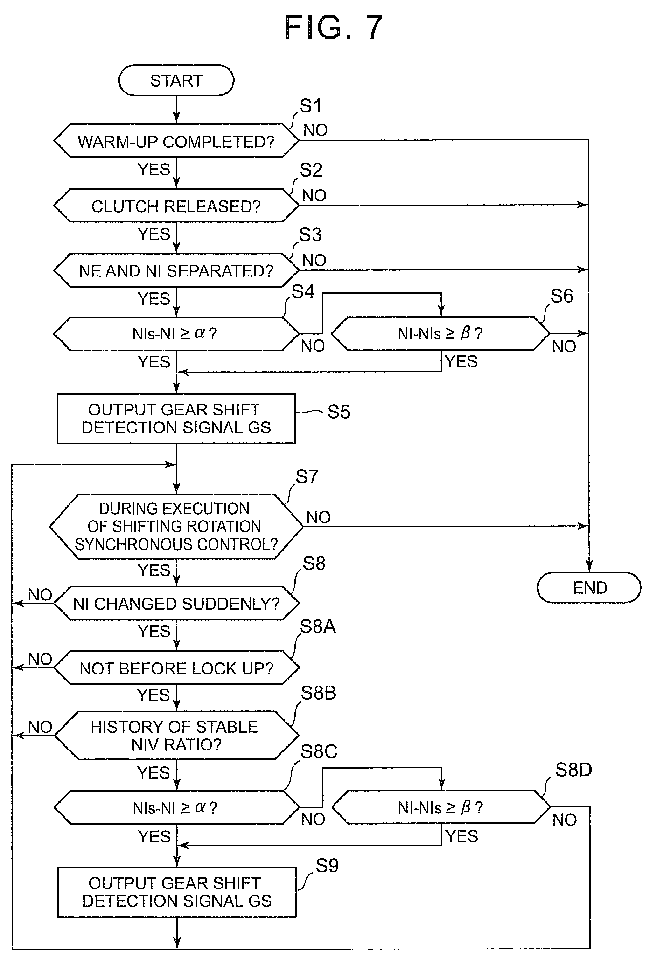

FIG. 7 is a flowchart illustrating an operation of a gear shift detection part 7 of a vehicle according to Embodiment 4 of the present invention, and is a view that is compared with FIG. 5. With reference to FIG. 7, the gear shift detection part 7 of Embodiment 4 is different from the gear shift detection part 7 of Embodiment 3 in that steps S8C, S8D are performed between step S8B and step S9. Steps S8C, S8D are the same as steps S4, S6, respectively.

When it is determined, in step S8B, that there is a history that a NIV ratio is stable (YES in step S8B), the gear shift detection part of the present embodiment determines whether a difference NIs - NI between a smooth value NIs of an input shaft rotation speed and a rough value (a current detection value of an input shaft rotation speed NI) is at least a prescribed determination value α or not, in step S8C. When it is determined that NIs - NI ≥ α is satisfied, a gear shift detection signal GS is output in step S9.

When it is determined that NIs - NI ≥ α is not satisfied in step S8C, it is determined, in step S8D, whether a difference NI - NIs between the rough value (the current detection value of the input shaft rotation speed NI) and the smooth value NIs of the input shaft rotation speed is at least a prescribed determination value β or not. When it is determined that NI - NIs ≥ β is satisfied, the gear shift detection signal GS is output in step S9. When it is determined that NI - NIs ≥ β is not satisfied in step S8D, the process returns to step S7. The other configurations and operations are the same as in Embodiment 1, so descriptions thereof are not repeated herein.

In Embodiment 4, it is possible to obtain the same effect as Embodiment 3, and further, it is possible to detect second or later changes of the gear with accuracy.

It should be considered that the embodiments described herein are just examples in all respects and are not limitative. A scope of the present invention is shown by Claims, not by the descriptions, and intended to include all modifications made within the meaning and scope equivalent to Claims.

## Claims

1. A control device for a vehicle, the vehicle including an engine (1), a clutch (2), and a manual transmission (4), the vehicle being configured such that an output shaft of the engine (1) is connected to an input shaft of the manual transmission via the clutch (2), the control device comprising:
an electronic control unit (6) configured to:
(i) detect a change of a gear of the manual transmission (4) based on a change of a rotation speed of the input shaft of the manual transmission after the clutch is released;
(ii) output a gear shift detection signal indicating that the change of the gear of the manual transmission is detected;
(iii) perform a shifting rotation synchronous control of synchronizing a rotation speed of an output shaft of the engine with the rotation speed of the input shaft of the manual transmission, in response to the output of the gear shift detection signal; and
(iv) perform the shifting rotation synchronous control again when the gear shift detection signal is output during execution of the shifting rotation synchronous control.

2. The control device according to claim 1, wherein
the electronic control unit (6) is configured to:
(v) output the gear shift detection signal when (a) a ratio between the rotation speed of the input shaft of the manual transmission (4) and a speed of the vehicle is stable for a predetermined time or more and (b) the change of the gear of the manual transmission (4) is detected, during execution of the shifting rotation synchronous control; and
(vi) reset a target engine rotation speed having a value suitable for the rotation speed of the input shaft of the manual transmission (4) and perform the shifting rotation synchronous control again, when the gear shift detection signal is output during execution of the shifting rotation synchronous control.
